# EUROPEAN PATENT APPLICATION

(11) **EP 1 613 068 A1**
(43) Date of publication of application: **04.01.2006**
(21) Application number: 04725160.8
(22) Date of filing: 01.04.2004
(51) Int. Cl.: H04N 5/45

(54) **OSD-SYNTHESIZED IMAGE DECODING DEVICE, OSD-SYNTHESIZED IMAGE DECODING METHOD, PROGRAM, AND RECORDING MEDIUM**

(30) Priority: 09.04.2003 JP 2003105022
(71) Applicant: MATSUSHITA ELECTRIC INDUSTRIAL CO., LTD., Kadoma-shi, Osaka 571-8501 (JP)
(72) Inventor: KOMENO, Junichi, Osaka-shi, Osaka 536-0008 (JP)
(74) Representative: Grünecker, Kinkeldey, Stockmair & Schwanhäusser Anwaltssozietät
(86) International application number: PCT/JP2004/004780
(87) International publication number: WO 2004/091198

(57) **Abstract**

When connections are made to plural display devices having different image resolution formats at the same time, image data cannot be outputted in different image resolution formats at the same time.

An OSD composite image decoding apparatus includes: selection means 20 of selecting plural types of decoded image data; conversion means 40 of converting the selected decoded image data to 1080i; means 51 of generating OSD for 1080i to be synchronously superimposed on the format-converted image data; means 50 of superimposing the generated OSD for 1080i and the image data format-converted to the 1080i image resolution format on each other; means 60,61 of converting the superimposed 1080i image data to 480p or 480i; switching means 70 of switching between 1080i, 480p and 480i for each of output terminals; and processing means 30 of informing the selection means 20 of decoded image data desired to be decoded and instructing the switching means 70 to perform switching so that the decoded image data becomes suited to the image resolution format of an externally connected display device.

## Description

### Technical Field

The present invention relates to an OSD composite image decoding apparatus, OSD composite image decoding method, program and recording medium for use in DVD recorders, digital tuner containing disk record reproducing devices and the like for outputting a program guide transmitted by digital TV broadcasting or information indicative of an operating state of a recording/reproducing apparatus, such as a DVD recorder, as superimposed on decoded image data to external display equipment.

### Background Art

There exists a device having the OSD function of causing external display equipment to display a program guide transmitted by digital TV broadcasting for example or information indicative of an operating state of a recording/reproducing apparatus, such as a DVD recorder, as superimposed on decoded image data. With such a device having the OSD function, it is possible to display a transmitted program guide, an operating state such as reproduction, fast forward, reverse or the like of image data, an operation menu, or the like as superimposed on an image displayed on external display equipment.

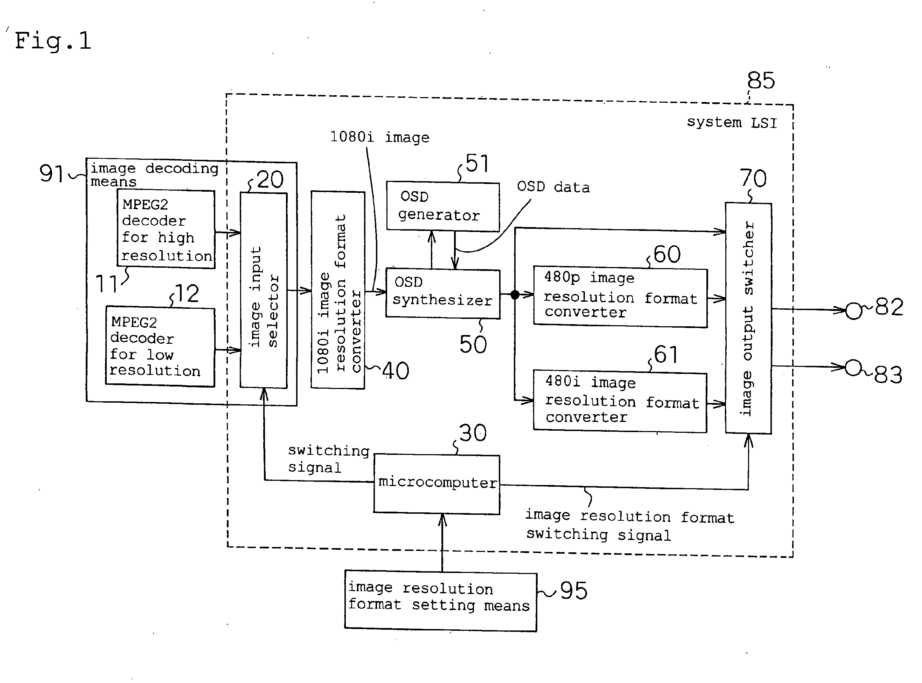

A digital broadcasting receiving apparatus has been known as a conventional OSD composite image decoding apparatus having such an OSD function (for example, Japanese Patent Laid-Open Publication No. 2000-347638, paragraphs 0026 to 0057 and Fig. 1.)

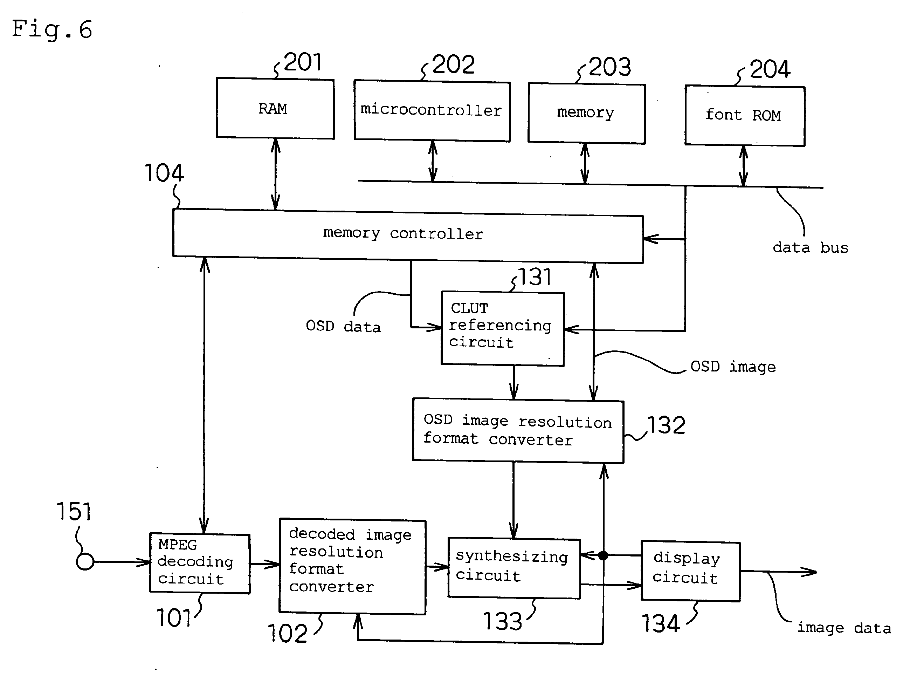

Fig. 6 illustrates such a conventional OSD composite image decoding apparatus described in Japanese Patent Laid-Open Publication No. 2000-347638.

In Fig. 6, a bit stream as encoding data is inputted from a terminal 151 to an MPEG decoding circuit 101 and then transferred to and temporarily stored in RAM 201 via a memory controller 104. The decoded image data stored in the RAM 201 is read by the MPEG decoding circuit 101 via the memory controller 104 in a sequence in which the image data is to be displayed and then transferred to a decoded image resolution format conversion circuit 102. The decoded image resolution format conversion circuit 102 scales the pixel size up and down horizontally and vertically to adjust the image resolution format of the decoded image (480i image resolution format, 480p image resolution format, 1080i image resolution format, or the like) to the image resolution format of a display to which the output is to be done. If the image resolution format of the display to which the output is to be done is the 480i image resolution format for example, the decoded image resolution format conversion circuit 102 scales the pixel size up and down horizontally and vertically so that the decoded image data has the 480i image resolution format. The decoded image format-converted by the decoded image resolution format conversion circuit 102 is transferred to a synthesizing circuit 133. In the transfer to the synthesizing circuit 133, the output rate of pixels to be transferred is fed from a display circuit 134 to the decoded image resolution format conversion circuit 102. Each of the pixels is transferred synchronously with the pixel rate.

Graphic data to be combined with the decoded image is prepared by a microcontroller 202. In the case where the information source of the graphic data is text data, the text data is stored in memory 203, and the microcontroller 202 reads necessary character font data out of font ROM 204 to generate the graphic data according to a graphic generation program also stored in the memory 203.

The microcontroller 202 transfers color data on 256 colors to a color look up table provided in a CLUT (Color Look Up Table) referencing circuit 131.

The CLUT referencing circuit 131 reads OSD graphic data out of the memory 203 via the memory controller 104. The data thus read is indicative of the pallet numbers of the respective pixels, and the CLUT referencing circuit 131 references 24-bit luminance and color difference information corresponding to each pixel from a color look-up table. The luminance and color difference information on each pixel is transferred to an OSD image resolution format conversion circuit 132. The OSD image resolution format conversion circuit 132 performs processing to reduce the horizontal pixel count and the vertical pixel count for each of luminance signal and color difference signal. In the case where the image resolution format of the display to which the output is to be done is the 480i image resolution format for example, the OSD image resolution format conversion circuit 132 reduces the horizontal pixel count and the vertical pixel count for each of the luminance signal and color difference signal so that they become suitable for the 480i image resolution format.

The synthesizing circuit 133 obtains the current pixel positions on scanning lines from the display circuit 134, references data items corresponding to the respective current pixel positions based on the decoded image and OSC image data, performs synthesis at a predetermined ratio, and outputs the resultant to the display circuit 134. The display circuit 134 outputs OSD composite image data together with a synchronizing signal suited to the external display.

The foregoing description has been directed to the case where the image resolution format of the display to which the output is to be done is the 480i image resolution format. Unlike this case, if the image resolution format of the display to which the output is to be done is the 480p image resolution format, the decoded image resolution format conversion circuit 102 and the OSD image resolution format conversion circuit 132 operate as follows.

That is, the decoded image resolution format conversion circuit 102 scales the pixel size up and down horizontally and vertically so that the decoded image data has the 480p image resolution format.

The OSD image resolution format conversion circuit 132 performs processing to reduce the horizontal pixel count and the vertical pixel count for each of the luminance signal and color difference signal obtained from the OSD graphic data so that they become suitable for the 480p image resolution format.

That is, the OSD image resolution format conversion circuit 132 of the conventional OSD composite image decoding apparatus performs processing to reduce the horizontal pixel count and the vertical pixel count for each of the luminance signal and color difference signal obtained from the OSD graphic data so that they become suitable for the 480p image resolution format. Accordingly, the OSD image resolution format conversion circuit 132 performs processing to reduce the horizontal pixel count and the vertical pixel count for each of the luminance signal and color difference signal obtained from the OSD graphic data at a reduction ratio which differs between the case where a display compatible with the 480i image resolution format is connected to the conventional OSD composite image decoding apparatus and the case where a display compatible with the 480p image resolution format is connected to the conventional OSD composite image decoding apparatus.

Thus, in generating OSD data, which is luminance and color difference signals obtained from the OSD graphic data, the conventional OSD composite image decoding apparatus performs processing to reduce the horizontal pixel count and the vertical pixel count included in OSD data so that they become suitable for the image resolution format of a display to which the output is to be done.

However, the above-described conventional configuration has a problem that when connected to plural display devices having different image resolution formats, for example, a D3 terminal-compatible television set and a composite-compatible television set, at the same time, the conventional configuration can output a composite image to only one of the display devices since the conventional configuration has only one decoded image resolution format conversion circuit and only one OSD image resolution format conversion circuit.

Further, with the above-described conventional configuration, even when the display device connected to the OSD composite image decoding apparatus is replaced with a display device having a different image resolution format, the OSD image resolution format conversion circuit 132 need be capable of reducing the horizontal pixel count and vertical pixel count included in the OSD data at a varied reduction ratio so that they become suitable for the image resolution format of the replacing display device in order for the OSD composite image to be displayed normally.

That is, even when the display device connected to the conventional OSD composite image decoding apparatus is replaced with a display device having a different image resolution format, the OSD composite image decoding apparatus needs to have such a high capability as to enable reduction of the horizontal pixel count and vertical pixel count included in the OSD data at a varied reduction ratio so that an OSD composite image suitable for the image resolution format of the replacing display device can be produced. This raises a problem that the configuration of the apparatus becomes complicated.

### Disclosure of Invention

In view of the foregoing problems, an object of the present invention is to provide an OSD composite image decoding apparatus which, even when connected to plural display devices having different image resolution formats at the same time, is capable of outputting image data suited to each of the image resolution formats of the respective display devices, as well as an OSD composite image decoding method, program and recording medium.

Another object of the present invention is to provide an OSD composite image decoding apparatus, OSD composite image decoding method, program and recording medium which are capable of realizing a simpler configuration of generating OSD data and integrating the same with a decoded image into a composite image.

In order to solve the above-mentioned problems, the 1^{st} aspect of the present invention is an OSD composite image decoding apparatus comprising:
image decoding means of decoding plural types of compressed image data which are different in image resolution format from each other;
first image resolution format conversion means of converting decoded image data decoded by said image decoding means to a first image resolution format and outputting said decoded image data thus converted when said decoded image data has an image resolution format other than said first image resolution format while outputting said decoded image data without conversion when said decoded image data has said first image resolution format;
OSD generating means of generating OSD for said first image resolution format to be synchronously superimposed on the image data outputted from said first image resolution format conversion means;
OSD synthesis means of superimposing said OSD for said first image resolution format generated by said OSD generating means and said image data outputted from said first image resolution format conversion means on each other;
second image resolution format conversion means of converting said image data having said first image resolution format which has undergone synthesis by said OSD synthesis means to image data having a second image resolution format having a lower resolution than said first image resolution format;
third image resolution format conversion means of converting the image data having said first image resolution format which has undergone synthesis by said OSD synthesis means to image data having a third image resolution format having a lower resolution than said second image resolution format;
plural output terminals to be connected to display devices, respectively;
output switching means connected to said OSD synthesis means, said second image resolution format conversion means and said third image resolution format conversion means and capable of inputting the image data having said first image resolution format, the image data having said second image resolution format and the image data having said third image resolution format and outputting them selectively; and
processing means of instructing said output switching means to output image data that is compatible with an image resolution format which is displayable by respective display devices to be connected to said output terminals to respective relevant one of said output terminals.

Further, the 2^{nd} aspect of the present invention is the OSD composite image decoding apparatus according to the 1^{st} aspect of the present invention, further comprising image resolution format setting means of inputting and setting relation between each of said output terminals and an image resolution format which is displayable by said display device to be connected thereto, wherein
said processing means is operative to input said relation by said image resolution format setting means and gives an instruction according to said relation.

Further, the 3^{rd} aspect of the present invention is the OSD composite image decoding apparatus according to the 1^{st} aspect of the present invention, further comprising image resolution format obtaining means provided between the output switching means and at least one of the plural output terminals and operative to obtain information indicative of the image resolution format of the display device to be connected to that output terminal and outputting the information to the processing means.

Further, the 4^{th} aspect of the present invention is the OSD composite image decoding apparatus according to the 1^{st} aspect of the present invention, wherein said processing means is operative to judge a type of image resolution format which is allowed to be outputted based on stream information included in said decoded image data and control said output switching means.

Further, the 5^{th} aspect of the present invention is the OSD composite image decoding apparatus according to the 4^{th} aspect of the present invention, wherein:
said compressed image data is compressed image data read out of a DVD;
said stream information includes a digital copy control descriptor; and
said processing means is operative to prohibit an analog output of the image data in said first image resolution format when the image resolution format of the image data is copy-protected by said digital copy control descriptor.

Further, the 6^{th} aspect of the present invention is the OSD composite image decoding apparatus according to the 1^{st} aspect of the present invention, wherein when plural ones of said display devices whose image resolution formats are different are connected to respective said output terminals at the same time, said processing means is operative to instruct said output switching means to output image data that is compatible with an image resolution format which is displayable by respective said display devices to be connected to respective said output terminals to respective relevant one of said output terminals.

Further, the 7^{th} aspect of the present invention is the OSD composite image decoding apparatus according to the 1^{st} aspect of the present invention, wherein said first image resolution format conversion means is operative to judge the image resolution format of said decoded image data by utilizing at least one of pixel clock frequency, horizontal synchronizing signal frequency and vertical synchronizing frequency of said decoded image data and determine an enlargement ratio to said first image resolution format based on said image resolution format thus judged.

Further, the 8^{th} aspect of the present invention is the OSD composite image decoding apparatus according to the 1^{st} aspect of the present invention, wherein:
said processing means is operative to judge the image resolution format of said decoded image data from stream information included in said decoded image data, determine an enlargement ratio to said first image resolution format based on said image resolution format thus judged, and inform said first image resolution format conversion means of said enlargement ratio thus determined; and
said first image resolution format conversion means is operative to convert said decoded image data to said first image resolution format using said enlargement ratio thus given.

Further, the 9^{th} aspect of the present invention is the OSD composite image decoding apparatus according to the 1^{st} aspect of the present invention, wherein:
said first image resolution format is 1080i image resolution format;
said second image resolution format is 480p image resolution format; and
said third image resolution format is 480i image resolution format.

Further, the 10^{th} aspect of the present invention is an OSD composite image decoding method comprising:
an image decoding step of decoding plural types of compressed image data which are different in image resolution format from each other;
a first image resolution format conversion step of converting decoded image data decoded at said image decoding step to a first image resolution format and outputting said decoded image data thus converted when said decoded image data has an image resolution format other than said first image resolution format while outputting said decoded image data without conversion when said decoded image data has said first image resolution format;
an OSD generating step of generating OSD for said first image resolution format to be synchronously superimposed on the image data outputted at said first image resolution format conversion step;
an OSD synthesis step of superimposing said OSD for said first image resolution format generated at said OSD generating step and the image data outputted at said first image resolution format conversion step on each other;
a second image resolution format conversion step of converting said image data having said first image resolution format which has undergone synthesis at said OSD synthesis step to image data having a second image resolution format having a lower resolution than said first image resolution format;
a third image resolution format conversion step of converting the image data having said first image resolution format which has undergone synthesis at said OSD synthesis step to image data having a third image resolution format having a lower resolution than said second image resolution format;
an output switching step capable of inputting the image data having said first image resolution format which results from said OSD synthesis step, the image data having said second image resolution format which results from said second image resolution format conversion step and the image data having said third image resolution format which results from said third image resolution format conversion step and outputting them selectively; and
a processing step of giving an instruction to said output switching step to output image data that is compatible with an image resolution format which is displayable by respective said display devices to be connected to plural output terminals to respective relevant one of said output terminals.

Further, the 11^{th} aspect of the present invention is a program of causing a computer to function as:
image decoding means of decoding plural types of compressed image data which are different in image resolution format from each other;
first image resolution format conversion means of converting decoded image data decoded by said image decoding means to a first image resolution format and outputting said decoded image data thus converted when said decoded image data has an image resolution format other than said first image resolution format while outputting said decoded image data without conversion when said decoded image data has said first image resolution format;
OSD generating means of generating OSD for said first image resolution format to be synchronously superimposed on the image data outputted from said first image resolution format conversion means;
OSD synthesis means of superimposing said OSD for said first image resolution format generated by said OSD generating means and said image data outputted from said first image resolution format conversion means on each other;
second image resolution format conversion means of converting said image data having said first image resolution format which has undergone from synthesis by said OSD synthesis means to image data having a second image resolution format having a lower resolution than said first image resolution format;
third image resolution format conversion means of converting the image data having said first image resolution format which has undergone synthesis by said OSD synthesis means to image data having a third image resolution format having a lower resolution than said second image resolution format;
output switching means connected to said OSD synthesis means, said second image resolution format conversion means and said third image resolution format conversion means and capable of inputting the image data having said first image resolution format, the image data having said second image resolution format and the image data having said third image resolution format and outputting them selectively; and
processing means of instructing said output switching means to output image data that is compatible with an image resolution format which is displayable by respective display devices to be connected to said output terminals to respective relevant one of said output terminals,
of an OSD composite image decoding apparatus as recited in the 1^{st} aspect of the present invention.

Further, the 12^{th} aspect of the present invention is a recording medium carrying a program as recited in the 11^{th} aspect of the present invention, which is operable by a computer.

When connected to plural display devices having different image resolution formats at the same time, this configuration is capable of outputting an image to these display devices at the same time.

### Brief Description of Drawings

Fig. 1 is a block diagram of an OSD composite image decoding apparatus in embodiment 1 of the present invention.
Fig. 2 is a view showing an operation menu of image resolution format setting means in embodiments 1 to 4 of the present invention.
Fig. 3 is a block diagram of an OSD composite image decoding apparatus in embodiment 2 of the present invention.
Fig. 4 is a block diagram of an OSD composite image decoding apparatus in embodiment 3 of the present invention.
Fig. 5 is a block diagram of an OSD composite image decoding apparatus in embodiment 4 of the present invention.
Fig. 6 is a block diagram of a conventional OSD composite image decoding apparatus.

### (Description of reference characters)

- 11: MPEG2 decoder for high resolution
- 12: MPEG2 decoder for low resolution
- 20: image input selector
- 21: stream information selector
- 30: microcomputer
- 30a: microcomputer
- 30b: microcomputer
- 30c: microcomputer
- 40: 1080i image resolution format converter
- 40a: 1080i image resolution format converter
- 50: OSD synthesizer
- 51: OSD generator
- 60: 480 image resolution format converter
- 61: 480i image resolution format converter
- 70: image output switcher
- 80: LSI for HDMI
- 81: HDMI terminal

- 82: D3 terminal
- 83: composite terminal
- 91: image decoding means
- 92: image decoding means
- 95: image resolution format setting means
- 101: MPEG decoding circuit
- 103: decoded image resolution format converter
- 104: memory controller
- 131: CLUT referencing circuit
- 132: OSD image resolution format converter
- 133: synthesizing circuit
- 134: display circuit
- 151: terminal
- 201: RAM
- 202: microcontroller
- 203: memory
- 204: font ROM
- 951: .button
- 952: button
- 952a: button
- 952b: button
- 952c: button

### Best Mode for Carrying Out the Invention

Hereinafter, embodiments of the present invention will be described with reference to the drawings.

### (Embodiment 1)

In Embodiment 1, description is made of an OSD composite image decoding apparatus in which information indicative of the image resolution formats of monitors to be externally connected to the OSD composite image decoding apparatus is previously set in accordance with an instruction from an operator, and which, even when connected to plural monitors having different image resolution formats, is capable of outputting a composite image synthesized by superimposition of OSD data to the plural monitors.

Fig. 1 is a block diagram of the OSD composite image decoding apparatus in embodiment 1 of the present invention.

The OSD composite image decoding apparatus includes an MPEG2 decoder 11 for high resolution, an MPEG2 decoder 12 for low resolution, an image input selector 20, a microcomputer (hereinafter will be referred to as micom) 30, a 1080i image resolution format converter 40, an OSD synthesizer 50, an OSD generator 51, a 480p image resolution format converter 60, a 480i image resolution format converter 61, an image output switcher 70, a D3 terminal 82, and a composite terminal 83.

The MPEG2 decoder 11 for high resolution is means of decoding the bit stream of compressed high resolution image data (hereinafter, high resolution interlaced image data will be referred to as 1080i image.)

The MPEG2 decoder 12 for low resolution is means of decoding the bit stream of compressed low resolution image data (hereinafter, low resolution interlaced image data will be referred to as 480i image.)

The image input selector 20 is means of outputting decoded image data to be outputted as an image in accordance with a switching signal sent from the micom 30 to the 1080i image resolution format converter 40.

The micom 30 is means of selecting OSD-attached image data to be transferred to each terminal by sending the switching signal to the image input selector 20 to select decoded image data to be outputted as an image while sending an image resolution format switching signal to the image output switcher 70.

Image resolution format setting means 95 is means of previously setting the image resolution format of a monitor to be externally connected to the D3 terminal 82 or the composite terminal 83 in accordance with an instruction from the operator.

The 1080i image resolution format converter 40 is means of enlarging decoded image data transferred from the image input selector 20 into an image having a 1080i image resolution format.

The OSD synthesizer 50 is means of combining OSD data having the 1080i image resolution format with the 1080i image on a pixel basis and outputting the resulting composite image.

The OSD generator 51 is means of transferring the OSD data having the 1080i image resolution format to the OSD synthesizer 50.

The 480p image resolution format converter 60 is means of reducing the OSD-attached 1080i image data into an OSD-attached 480p image (progressive image of the 480i image).

The 480i image resolution format converter 61 is means of reducing the OSD-attached 1080i image data into an OSD-attached 480i image.

The image output switcher 70 is means of selecting OSD-attached image data to be transferred to each terminal in accordance with the image resolution format switching signal sent from the micom 30.

The D3 terminal 82 is a terminal which allows the 480i image, 480p image and 1080i image to be outputted therefrom.

The composite terminal 83 is a terminal which allows only the 480i image to be outputted therefrom.

The section encircled by broken line in Fig. 1 is constituted of a one-chip LSI as a system LSI 85. Specifically, the one-chip LSI serves as the system LSI 85 comprising the image input selector 20, micom 30, 1080i image resolution format converter 40, OSD synthesizer 50, OSD generator 51, 480p image resolution format converter 60, 480i image resolution format converter 61, and image output switcher 70. By thus integrating these constituents of the OSD composite image decoding apparatus into one chip serving as the system LSI 85, the cost required for assemblage of the OSD composite image decoding apparatus can be reduced.

In Fig. 1, the MPEG2 decoder 11 for high resolution, MPEG2 decoder 12 for low resolution and image input selector 20 constitute image decoding means 91.

It should be noted that the image decoding means 91 of this embodiment is an example of the image decoding means of the present invention. The 1080i image resolution format converter 40 of this embodiment is an example of the first image resolution format conversion means of the present invention. The OSD generator 51 of this embodiment is an example of the OSD generating means of the present invention. The OSD synthesizer 50 of this embodiment is an example of the OSD synthesis means of the present invention. The 480p image resolution format converter 60 of this embodiment is an example of the second image resolution conversion means of the present invention. The 480i image resolution format converter 61 of this embodiment is an example of the third image resolution conversion means of the present invention. The D3 terminal 82 and composite terminal 83 of this embodiment are examples of the plural output terminals of the present invention. The image output switcher 70 of this embodiment is an example of the output switching means of the present invention. The micom 30 of this embodiment is an example of the processing means of the present invention. The image resolution format setting means 95 of this embodiment is an example of the image resolution format setting means of the present invention. The monitors of this embodiment are examples of the display devices of the present invention. The 1080i image of this embodiment is an example of the image having the first image resolution format of the present invention. The 480p image of this embodiment is an example of the image having the second image resolution format of the present invention. The 480i image of this embodiment is an example of the image having the third image resolution format of the present invention. The 1080i image resolution format of this embodiment is an example of the first image resolution format of the present invention. The 480p image resolution format of this embodiment is an example of the second image resolution format of the present invention. The 480i image resolution format of this embodiment is an example of the third image resolution format of the present invention.

Next, description will be made of the operation of this embodiment.

In Fig. 1, the MPEG2 decoder 11 for high resolution decodes the bit stream of compressed high resolution image data. The image data decoded is inputted to the image input selector 20. The MPEG2 decoder 12 for low resolution decodes the bit stream of compressed low resolution image data. Like the image data decoded by the MPEG2 decoder 11 for high resolution, the image data decoded by the decoder 12 is inputted to the image input selector 20.

The operator (not shown) informs the micom (hereinafter referred to as micom) 30 of an image desired to be outputted via a user interface (not shown). The micom 30 sends the switching signal to the image input selector 20 to cause the image input selector 20 to output decoded image data desired to be outputted as an image to the 1080i image resolution format converter 40.

The 1080i image resolution format converter 40 enlarges the decoded image data transferred from the image input selector 20 into the image having the 1080i image resolution format. Specifically, if the decoded image data transferred from the image input selector 20 is the 1080i image, the 1080i image resolution format converter 40 transfers the decoded image data to the OSD synthesizer 50 without image resolution format conversion, whereas if the decoded image data is the 480i image, the 1080i image resolution format converter 40 enlarges it into the 1080i image and then transfers the 1080i image to the OSD synthesizer 50. The 1080i image resolution format converter 40 determines the enlargement ratio by judging the image resolution format of the image data from the pixel clock frequency, horizontal synchronizing signal frequency and vertical synchronizing signal frequency of the image data inputted.

Here, the judgment on the image resolution format of image data is described specifically. The 480i image has a vertical synchronizing signal frequency of 59.94 Hz, a horizontal synchronizing signal frequency of 15.73 kHz and a pixel clock frequency of 27 MHz. The 480p image has a vertical synchronizing signal frequency of 59.94 Hz, a horizontal synchronizing signal frequency of 31.46 kHz and a pixel clock frequency of 27 MHz. That is, the 480i image and the 480p image are different from each other in horizontal synchronizing signal frequency. Accordingly, the 1080i image resolution format converter 40 can judge the decoded image data transferred from the image input selector 20 as the 480i image if the horizontal synchronizing signal frequency thereof is 15.73 kHz. On the other hand, if the horizontal synchronizing signal frequency of the decoded image data is 31.46 kHz, the converter 40 can judge the decoded image data as the 480p image. The 1080i image is different from each of the 480i image and the 480p image in horizontal synchronizing signal frequency and pixel clock frequency both. Accordingly, the decoded image data can be judged as the 480i image, 480p image or 1080i image by checking only the horizontal synchronizing signal frequency or both of the horizontal synchronizing signal frequency and pixel clock frequency thereof. Once the decoded image data is identified as the 480i image, 480p image or 1080i image, the enlargement ratio can be determined.

The OSD synthesizer 50 extracts the pixel clock signal, horizontal synchronizing signal and vertical synchronizing signal from the 1080i image inputted from the 1080i image resolution format converter 40 and sends them to the OSD generator 51. The OSD generator 51 sends OSD data having the 1080i image resolution format to the OSD synthesizer 50 synchronously with the pixel clock signal, horizontal synchronizing signal and vertical synchronizing signal inputted thereto. The OSD synthesizer 50 combines the OSD data having the 1080i image resolution format with the 1080i image on a pixel basis and outputs the resulting combination.

The OSD-attached 1080i image data outputted from the OSD synthesizer 50 is inputted to the image output switcher 70, 480p image resolution format converter 60 and 480i image resolution format converter 61.

The 480p image resolution format converter 60, which is a device of reducing the OSD-attached 1080i image data into an OSD-attached 480p image (progressive image of the 480i image), outputs the OSD-attached 480p image to the image output switcher 70. The 480i image resolution format converter 61, which is a device of reducing the OSD-attached 1080i image data into an OSD-attached 480i image, outputs the OSD-attached 480i image to the image output switcher 70.

The image output switcher 70 is connected to the D3 terminal 82 which is capable of outputting the 480i image, 480p image and 1080i image and to the composite terminal 83 which is capable of outputting only the 480i image.

The micom 30 can select the OSD-attached image data to be transferred to each of the terminals by sending the image resolution format switching signal to the image output switcher 70. Now, assuming that the D3 terminal 82 is connected to a D3 terminal-compatible monitor, the micom 30 sends the image resolution format switching signal so that the D3 terminal 82 will output the 1080i image, which is the highest definition image that can be displayed by the D3 terminal-compatible monitor. If the D3 terminal 82 is connected to a D2 terminal-compatible monitor, the micom 30 sends the image resolution format switching signal so that the D3 terminal 82 will output the 480p image, which is the highest definition image that can be displayed by the D2 terminal-compatible monitor. If the composite terminal 83 is connected to a composite terminal-compatible monitor, the micom 30 sends the image resolution format switching signal so that the composite terminal 83 will output the 480i image, which is the sole image that can be displayed by the composite terminal-compatible monitor.

The presence or absence of a monitor connected to each of the D3 terminal 82 and the composite terminal 83, the type of the connected monitor if present and the type of compatible image resolution format with respect to the connected monitor, can be set as follows.

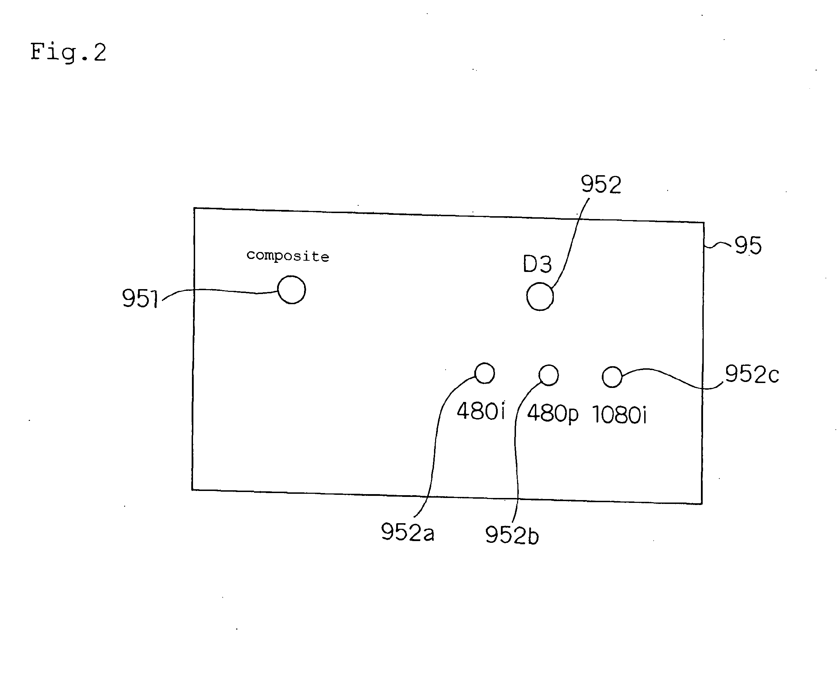

That is, the image resolution format setting means 95 is provided with the operation menu. Fig. 2 illustrates the operation menu portion of the image resolution format setting means 95. As illustrated in Fig. 2, the image resolution format setting means 95 includes buttons 951, 952, 952a, 952b and 952c as on/off switches on the operation panel. These buttons are lit red in the on-state and extinguished in the off-state. If the composite terminal 83 is connected to a monitor, the button 951 is turned on, whereas if the composite terminal 83 is not connected to any monitor, the button 951 is turned off. If the D3 terminal 82 is connected to a monitor, the button 952 is turned on, whereas if the D3 terminal 82 is not connected to any monitor, the button 952 is turned off. If the D3 terminal 82 is connected to a monitor, the following operation is further performed. That is, if the monitor connected to the D3 terminal 82 is capable of displaying image data having the 480i image resolution format, the button 952a is turned on. If the monitor is capable of displaying image data having the 480p image resolution format, the button 952b is turned on. If the monitor is capable of displaying image data having the 1080i image resolution format, the button 952c is turned on.

By thus having the operator operate the operation menu beforehand, the input is done of information on whether or not each of the D3 terminal 82 and the composite terminal 83 is connected to a monitor. If the D3 terminal 82 is connected to the monitor, the input is done of information on the image resolution format which can be displayed by the monitor. The image resolution format setting means 95 outputs the information thus set to the micom 30.

The micom 30 retains the information inputted from the operation menu, including the information indicative of whether or not each terminal is connected to a monitor and the information on the image resolution format which is compatible with the monitor connected to each terminal. Stated otherwise, the micom 30 retains information on the relation between each terminal and the image resolution format which is compatible with the monitor connected thereto.

The micom 30 thus previously retaining these items of information is capable of switching the image to be outputted depending on the monitor connected to each terminal by sending the image output switching signal to the image output switcher 70 based on the items of information as described above.

According to this embodiment wherein the three types of image data, i.e., the 1080i image data enlarged by the 1080i image resolution format converter 40, the 480p image data reduced by the 480p image resolution format converter 60 and the 480i image data reduced by the 480i image resolution format converter 61, are constantly inputted to the image output switcher 70 and the image resolution format switching signal sent from the micom 30 causes these types of image data to be directed to respective of the suitable terminals, even when the two terminals are connected to respective monitors having different image resolution formats, it is possible to output image data suited to each of these image resolution formats.

Also, this embodiment is capable of outputting OSD-attached image data in plural image resolution formats by the mere provision of OSD data for the 1080i image only.

That is, unlike the prior art, this embodiment need not perform such extra processing as reduction in the horizontal pixel count and vertical pixel count of OSD data to tailor the OSD data to an image resolution format to be outputted and, hence, can realize a simpler configuration of generating the OSD data and combining it with a decoded image into a composite image than does the prior art.

In spite of the fact that the 480i image, 480p image and 1080i image are different from each other in any one of image resolution format, screen aspect ratio and the like, this embodiment can obtain the advantage that image data can be outputted in plural image resolution formats without the need to provide OSD data for each of the image resolution formats and without the need to change the design of the operation menu to be OSD-displayed and the like for each of the image resolution formats.

While the image input selector 20 is connected to the two decoders and the image output switcher 70 connected to the two terminals in this embodiment, the number of such decoders and the number of such terminals may be more than two each.

While this embodiment 1 has been described to have the image decoding means 91 in which the MPEG2 decoder 11 for high resolution and the MPEG2 decoder 12 for low resolution are connected to the image input selector 20, the image input selector 20 may be connected to a single decoder that is capable of decoding both of the 480i image and the 1080i image.

In brief, the number of decoders connected to the image input selector 20 in the image decoding means 91 may be any number not less than 1 as long as the decoders are capable of decoding plural types of compressed image data having their respective image resolution formats.

While this embodiment has been described to have the micom 30 which, when the D3 terminal 82 is connected to a monitor compatible with plural types of image resolution format such as a D3 terminal-compatible monitor, sends the image resolution format switching signal so that the highest definition image that can be displayed by that monitor will be outputted, there is no limitation to this feature. Even when the D3 terminal 82 is connected to such a monitor compatible with plural types of image resolution format, it is possible that the image resolution format setting means 95 previously sets only one type of image resolution format, while the micom 30 sends the image resolution format switching signal so that an image having the image resolution format thus set will be outputted. In this case, the OSD composite image decoding apparatus is provided with such a mechanism that when any one of the buttons 952a, 952b and 952c of the image resolution format setting means 95 is turned on, other buttons which have so far been in the on-state are automatically turned off. Alternatively, it is possible that when the D3 terminal 82 is connected to a monitor compatible with plural types of image resolution format, the micom 30 sends the image resolution format switching signal so that the lowest definition image that can be displayed by that monitor will be outputted. Yet alternatively, it is possible that when the D3 terminal 82 is connected to a monitor compatible with plural types of image resolution format, the micom 30 sends the image resolution format switching signal so that an image having any one of the image resolution formats that are compatible with that monitor will be outputted.

While this embodiment 1 has been described to have the system LSI 85 constituted of a one-chip LSI forming the section encircled by broken line in Fig. 1, there is no limitation to this feature. The portion of the system LSI 85 excluding the OSD generator 51 and the micom 30 may be constituted of a one-chip LSI.

### (Embodiment 2)

Embodiment 2 is similar to embodiment 1 in the feature that information indicative of the image resolution formats of monitors to be externally connected to the OSD composite image decoding apparatus is previously set in accordance with an instruction from an operator and, even when plural monitors having different image resolution formats are connected thereto, the OSD composite image decoding apparatus is capable of outputting a composite image combined with OSD data to the plural monitors. But embodiment 2 deals with limitation on the displayable image resolution format for image data stored in a DVD or the like.

In embodiment 2, description is made of the case where bit streams protected by copyright, such as DVD contents, are handled. Since copyright-protected bit streams such as DVD contents have a limitation on image resolution format, enlargement of an image is not easily allowed. Conventionally, however, there exists no means of identifying such a limitation on image resolution format to limit the image data enlargement ratio and, hence, such a problem exists that the image data of DVD contents cannot be enlarged and displayed in an image resolution format within a permitted range.

In embodiment 2, description is made of an OSD composite image decoding apparatus capable of identifying the limitation on the image resolution format for a copyright-protected bit stream, enlarging the image data at an enlargement ratio within a permitted range and outputting the enlarged image data as an image.

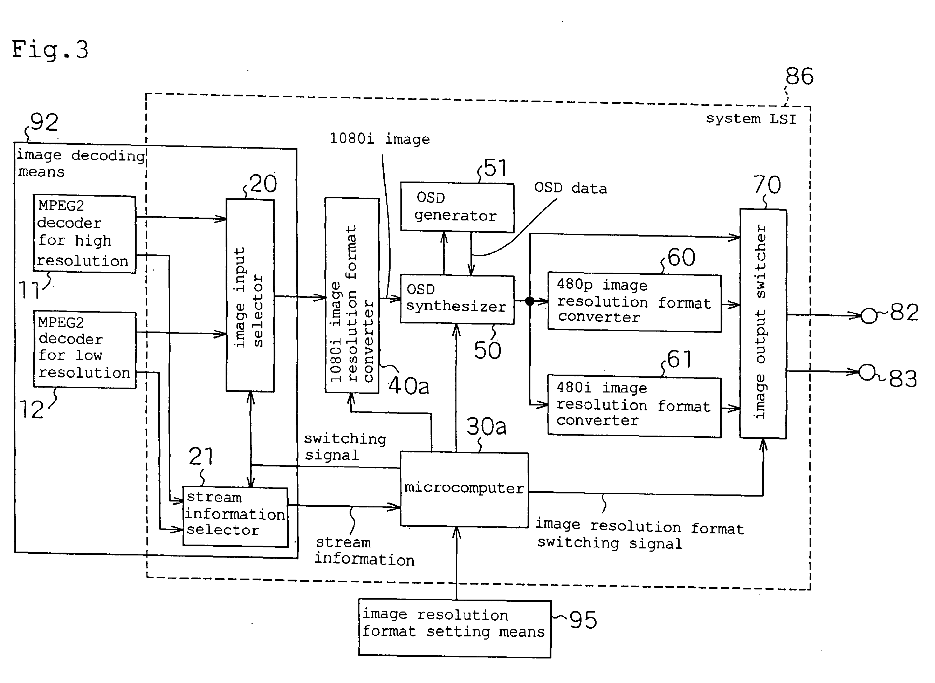

Fig. 3 is a block diagram of the OSD composite image decoding apparatus in embodiment 2 of the present invention. In Fig. 3, like reference characters are used to designate constituents like or corresponding to those of Fig. 1, and description of these constituents will be omitted.

Unlike the OSD composite image decoding apparatus of embodiment 1, the OSD composite image decoding apparatus of embodiment 2 includes a microcomputer (hereinafter will be referred to as micom) 30a, a 1080i image resolution format converter 40a, and a stream information selector 21.

The micom 30a is means of fulfilling the same function as the micom 30 of embodiment 1 while informing the 1080i image resolution format converter 40a of an enlargement ratio for decoded image data to be outputted as an image.

The 1080i image resolution format converter 40a is means of enlarging the decoded image data transferred from image input selector 20 at the enlargement ratio informed from the micom 30 into an image having the 1080i image resolution format.

The stream information selector 21 is means of outputting stream information corresponding to the decoded image data to the micom 30.

The section encircled by broken line in Fig. 3 is constituted of a one-chip LSI as a system LSI 86. Specifically, the one-chip LSI serves as the system LSI 86 comprising the image input selector 20, stream information selector 21, micom 30a, 1080i image resolution format converter 40a, OSD synthesizer 50, OSD generator 51, 480p image resolution format converter 60, 480i image resolution format converter 61, and image output switcher 70. By thus integrating these constituents of the OSD composite image decoding apparatus into one chip serving as the system LSI 86, the cost required for assemblage of the OSD composite image decoding apparatus can be reduced.

In Fig. 3, the MPEG2 decoder 11 for high resolution, MPEG2 decoder 12 for low resolution, image input selector 20 and stream information selector 21 constitute image decoding means 92.

It should be noted that the image decoding means 92 of this embodiment is an example of the image decoding means of the present invention. The 1080i image resolution format converter 40a of this embodiment is an example of the first image resolution format conversion means of the present invention. The micom 30a of this embodiment is an example of the processing means of the present invention.

Next, description will be made of the operation of this embodiment 2 by focusing attention on the differences from embodiment 1.

In Fig. 3, the MPEG2 decoder 11 for high resolution decodes the bit stream of a compressed 1080i image and extracts stream information. The image data decoded is inputted to the image input selector 20, while the stream information is inputted to the stream information selector 21. The MPEG2 decoder 12 for low resolution decodes the bit stream of a compressed 480i image and extracts stream information. Like the MPEG2 decoder 11 for high resolution, the decoder 12 inputs the decoded image data and the stream information to the image input selector 20 and the stream information selector 21, respectively. Here, the compressed 1080i image inputted to the MPEG2 decoder 11 for high resolution is compressed image data read out of a DVD, and the compressed 480i image inputted to the MPEG2 decoder 12 for low resolution is also compressed image data read out of a DVD.

The micom 30a sends the switching signal to the image input selector 20 to cause the image input selector 20 to output decoded image data desired to be outputted as an image to the 1080i image resolution format converter 40. The switching signal is sent to the stream information selector 21 also to cause the stream information selector 21 to output stream information corresponding to the decoded image data to the micom 30a.

Here, the stream information includes information indicative of the image resolution format of image data, namely, information indicative of which of the 480i image, 480p image and 1080i image the image data is, a digital copy control descriptor indicative of approval of copy of the image data, and the like.

The micom 30a judges the format of decoded image data from the stream information on image data desired to be decoded and informs the 1080i image resolution format converter 40a of the enlargement ratio.

The micom 30a checks the stream information on the decoded data image inputted against the maximum resolution of a monitor connected to each terminal and sends the image resolution format switching signal to the image output switcher 70 to select OSD-attached image data to be transferred to each terminal.

In the same manner as described in embodiment 1, the operator previously sets the image resolution formats of monitors in the OSD composite image decoding apparatus by the use of the operation menu.

Now, description will be made of the operation of the case where the OSD composite image decoding apparatus is connected to an external D3-compatible monitor in reproducing a DVD video.

MPEG2 stream information on a DVD video includes a digital copy control descriptor and usually has a copy protect flag set. In externally outputting such copy-protect image data in analog form, analog signals including a Macrovision signal have to be outputted. This Macrovision signal is compatible with the 480i and 480p image resolution formats only and, hence, the image data necessarily cannot be enlarged into the 1080i image. Stated otherwise, even if the external monitor is D3-compatible, only 480p image data and 480i image data can be outputted. For this reason, the micom 30a sends the image resolution format switching signal to the image output switcher 70 to cause the image output switcher to output to the D3 terminal 82 the 480p image of which the image resolution format has the highest definition that is compatible with the Macrovision signal.

Accordingly, the externally connected D3-compatible monitor displays image data having the 480p image resolution format.

Such a configuration is capable of outputting image data compliant with copyright-protected information, since the image resolution format switching signal according to the stream information extracted by the MPEG2 decoder 11 for high resolution is sent to the image output switcher 70.

While embodiment 1 has been described to have the system LSI 86 constituted of a one-chip LSI forming the section encircled by broken line in Fig. 3, there is no limitation to this feature. The portion of the system LSI 86 excluding the OSD generator 51 and the micom 30a may be constituted of a one-chip LSI.

While this embodiment has been described to limit the type of image resolution format to be used if MPEG2 stream information on a DVD video includes a digital copy control descriptor and has a copy protect flag set, there is no limitation to this feature. It is possible that the MPEG2 stream information includes image resolution format limitation information indicative of image resolution formats that can be outputted, while the micom 30a controls the image output switcher 70 to output only image data having an image resolution format approved by the image resolution format limitation information.

Further, while this embodiment has been described to have the micom 30a which sends the image resolution format switching signal to the image output switcher 70 to cause the image output switcher 70 to output to the D3 terminal 82 the 480p image of which the image resolution format has the highest resolution that is compatible with the Macrovision signal, there is no limitation to this feature. It is possible that the micom 30a sends the image resolution format switching signal to the image output switcher 70 to cause the image output switcher 70 to output to the D3 termanal 82 the 480i image of which the image resolution format has the lowest resolution that is compatible with the Macrovision signal.

### (Embodiment 3)

Embodiment 3 is an embodiment wherein with respect to some of the output terminals, the image resolution formats of monitors externally connected thereto are set according to an instruction of the operator as in embodiment 1, while, with respect to the other output terminals, the image resolution formats of monitors externally connected thereto are automatically detected, and instructed.

That is, in embodiment 3, description is made of the case where the image resolution formats of such externally connected monitors are recognized automatically. Since there exists no means of recognizing the image resolution format of a display device having an interface such as a DVI when connection is made to such a display device, the prior art has a problem that image data outputted cannot be displayed as an image by the display device when the scaling ratio does not match the image resolution format of the display device.

In embodiment 3, description is made of an OSD composite image decoding apparatus which, when connected to a display device having an HDMI interface allowing the image resolution format thereof to be recognized, is capable of outputting to the display device image data having an image resolution format matched with the image resolution format of the display device.

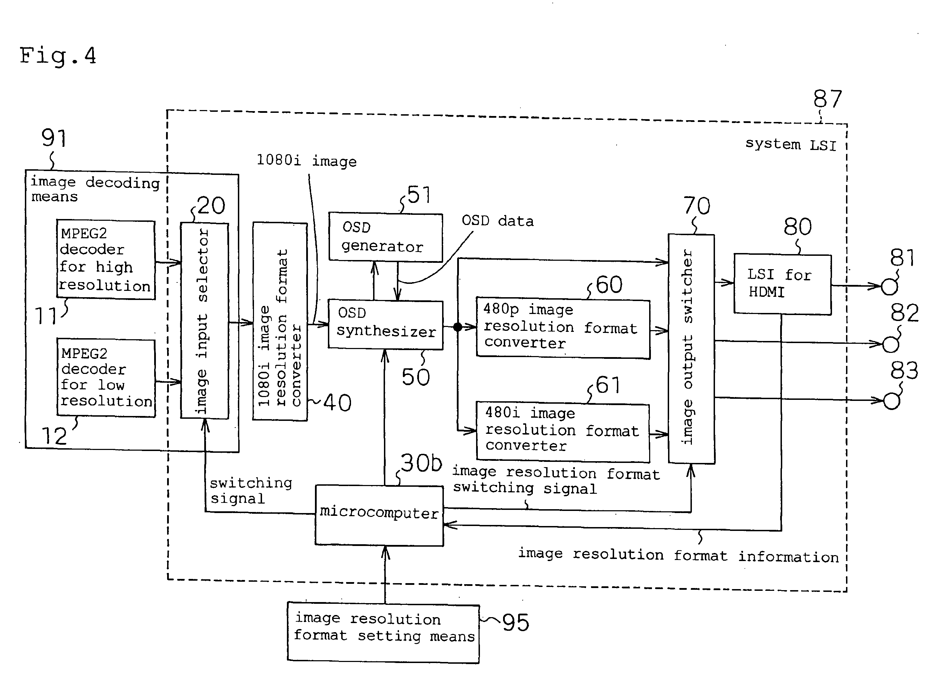

Fig. 4 is a block diagram of the OSD composite image decoding apparatus in embodiment 3 of the present invention. In Fig. 4, like reference characters are used to designate constituents like or corresponding to those of Figs. 1 and 3, and the description of these constituents will be omitted.

Unlike the OSD composite image decoding apparatus of embodiment 1, the OSD composite image decoding apparatus of embodiment 3 includes a micom (hereinafter will be referred to as microcomputer) 30b, an LDI 80 for HDMI, and an HDMI terminal 81.

The micom 30b is means capable of fulfilling the same function as the micom 30 of embodiment 1 while sending the image resolution format switching signal to image output switcher 70 to cause the image output switcher 70 to transfer OSD-attached 1080i image data to the HDMI terminal 81 based on image resolution format information given from the LSI 80 for HDMI.

In Fig. 4, to the image output switcher 70 are connected the LSI 80 for HDMI operative to control High-Definition Multimedia Interface (hereinafter will be referred to as HDMI), the D3 terminal 82 capable of outputting the 480i image, 480p image and 1080i image, and the composite terminal 83 capable of outputting only the 480i image. The LSI 80 for HDMI is connected to the HDMI terminal 81.

The section encircled by broken line in Fig. 4 is constituted of a one-chip LSI as a system LSI 87. Specifically, the one-chip LSI serves as the system LSI 87 comprising the image input selector 20, micom 30b, 1080i image resolution format converter 40, OSD synthesizer 50, OSD generator 51, 480p image resolution format converter 60, 480i image resolution format converter 61, image output switcher 70, and LSI 80 for HDMI. By thus integrating these constituents of the OSD composite image decoding apparatus into one chip serving as the system LSI 87, the cost required for assemblage of the OSD composite image decoding apparatus can be reduced.

In Fig. 4, the MPEG2 decoder 11 for high resolution, MPEG2 decoder 12 for low resolution and image input selector 20 constitute image decoding means 91 as in embodiment 1.

It should be noted that the micom 30b of this embodiment is an example of the processing means of the present invention. The LSI 80 for HDMI of this embodiment is an example of the image resolution format obtaining means of the present invention.

Next, description will be made of the operation of this embodiment 3 by focusing attention on the differences from embodiment 1.

The LSI 80 for HDMI is capable of recognizing the image resolution format of an HDMI-containing monitor (not shown) connected thereto via the HDMI terminal 81 through Plag and Play communications. Specifically, the LSI 80 for HDMI sends a message to the HDMI-containing monitor connected thereto via the HDMI terminal 81 to inquire about what type of monitor the HDMI-containing monitor is. In response to the message, the HDMI-containing monitor connected via the HDMI terminal 81 sends device information about what type of device the HDMI-containing monitor is. The device information includes information indicative of an image resolution format compatible with that monitor. Accordingly, the LSI 80 for HDMI can recognize the image resolution format of the HDMI-containing monitor connected via the HDMI terminal 81. The image resolution format information thus recognized is transferred to the micom 30b.

In the case where the HDMI terminal 81 is connected to an HDMI-compatible monitor having the 1080i image resolution format, the LSI 80 for HDMI informs the micom 30b that the 1080i image can be outputted.

The micom 30b, in receipt of the image resolution format information, can send the image resolution format switching signal to the image output switcher 70 to cause the image output switcher 70 to transfer OSD-attached 1080i image data to the HDMI terminal 81.

Since such a configuration is capable of automatically recognizing the image resolution format of an externally connected monitor by allowing the LSI 80 for HDMI to transfer the image resolution format information to the micom 30b, the configuration is capable of outputting optimum image data for the image resolution format of the monitor even if an operator does not recognize the image resolution format of an externally connected monitor.

While this embodiment 3 has been described to have the system LSI 87 constituted of a one-chip LSI forming the section encircled by broken line in Fig. 4, there is no limitation to this feature. The portion of the system LSI 87 excluding the OSD generator 51 and the micom 30 may be constituted of a one-chip LSI.

Further, though this embodiment 3 can automatically recognize the image resolution format of only the monitor externally connected to the HDMI terminal 81 and, therefore, cannot automatically recognize the image resolution formats of the monitors connected to respective of the D3 terminal 82 and the composite terminal 83, there is no limitation to this feature. It is possible that all the output terminals of the OSD composite image decoding apparatus of embodiment 3 are HDMI terminals. In this case, the image resolution formats of all the monitors connected to all the output terminals of the OSD composite image decoding apparatus can be automatically recognized.

### (Embodiment 4)

Embodiment 4 is similar to embodiment 3 in the feature that the image resolution formats of externally connected monitors are automatically obtained through some of the output terminals, but embodiment 4 is an embodiment dealing with limitation on the displayable image resolution format for image data stored in a DVD or the like.

In embodiment 4, description is made of the case where the image resolution format of an externally connected monitor is automatically recognized, while bit streams protected by copyright, such as DVD contents, are handled. Since copyright-protected bit streams such as DVD contents have a limitation on image resolution format, enlargement of an image is not easily allowed. Conventionally, however, there exists no means of identifying such a limitation on image resolution format to limit the image data enlargement ratio and, hence, such a problem exists that the image data of DVD contents cannot be enlarged and displayed in an image resolution format within a permitted range. Further, since the prior art has no means of recognizing the image resolution format of a display device having an interface such as a DVI if connection is made to such a display device, the prior art has a problem that image data outputted cannot be displayed as an image by the display device when the scaling ratio does not match the image resolution format of the display device.

In embodiment 4, description is made of an OSD composite image decoding apparatus which is capable of identifying the limitation on the image resolution format for a copyright-protected bit stream, enlarging the image data at an enlargement ratio within a permitted range and outputting an enlarged image, and which, when connected to a display device having an HDMI interface allowing the image resolution format thereof to be recognized, is capable of outputting to the display device image data having an image resolution format matched with the image resolution format of the display device.

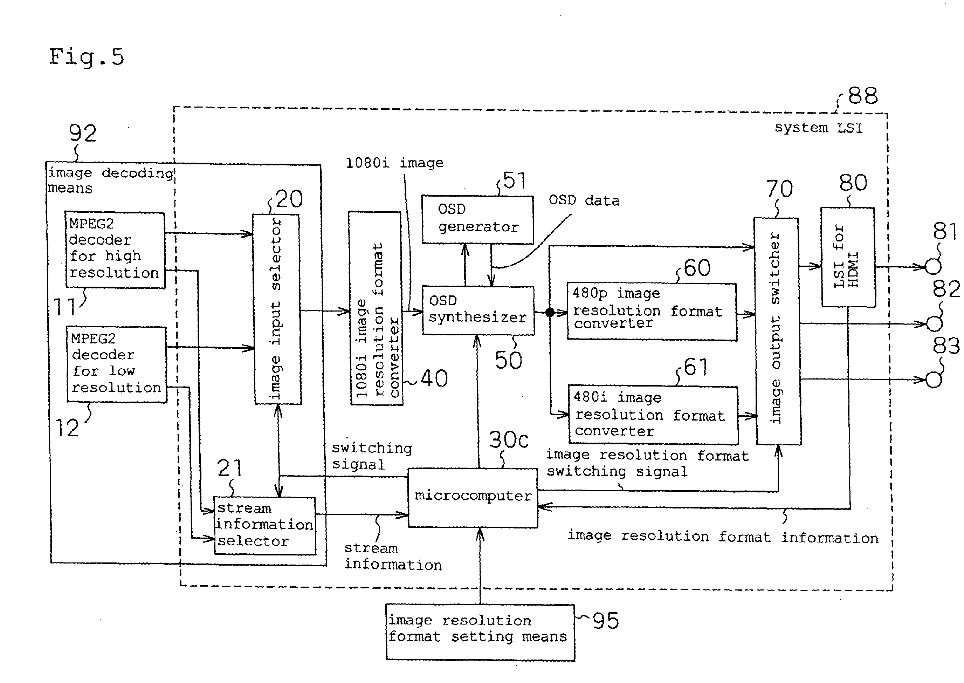

Fig. 5 is a block diagram of the OSD composite image decoding apparatus in embodiment 4 of the present invention. In Fig. 5, like reference characters are used to designate constituents like or corresponding to those of Figs. 1, 3 and 4, and the description of these constituents will be omitted.

The OSD composite image decoding apparatus of embodiment 4 includes the stream information selector 21 of embodiment 2, and the LSI 80 for HDMI and HDMI terminal 81 of embodiment 3, in addition to the configuration of embodiment 1. Further, the image decoding apparatus of this embodiment includes a microcomputer (hereinafter will be referred to as micom) 30c instead of the micom 30 of embodiment 1.

The micom 30c is means of judging an optimum image resolution format for each terminal based on extracted stream information and image resolution format information and informing the image output switcher 70 of the optimum image resolution format.

The section encircled by broken line in Fig. 5 is constituted of a one-chip LSI as a system LSI 88. Specifically, the one-chip LSI serves as the system LSI 88 comprising the image input selector 20, stream information selector 21, micom 30c, 1080i image resolution format converter 40, OSD synthesizer 50, OSD generator 51, 480p image resolution format converter 60, 480i image resolution format converter 61, image output switcher 70, and LSI 80 for HDMI. By thus integrating these constituents of the OSD composite image decoding apparatus into one chip serving as the system LSI 88, the cost required for assemblage of the OSD composite image decoding apparatus can be reduced.

In Fig. 5, the MPEG2 decoder 11 for high resolution, MPEG2 decoder 12 for low resolution, image input selector 20 and stream information selector 21 constitute image decoding means 92 as in embodiment 2.

It should be noted that the micom 30c of this embodiment is an example of the processing means of the present invention.

Next, description will be made of the operation of this embodiment 4 by focusing attention on the differences from embodiments 1 to 3.

Now, description will be made of the operation of the OSD composite image decoding apparatus with its HDMI terminal 81 connected to an HDMI-capable monitor having the 1080i image resolution format and with its D3 terminal connected to a D3-compatible monitor in reproducing a DVD video.

As in embodiment 2, the stream information selector 21 transfers stream information to the micom 30c.

MPEG2 stream information on a DVD video includes a digital copy control descriptor and usually has a copy protect flag set. In externally outputting such copy-protect image data in analog form, analog signals including a Macrovision signal have to be outputted. For this reason, the micom 30c sends the image resolution format switching signal to the image output switcher 70 to cause the image output switcher 70 to output to the D3 terminal 82 the 480p image of which the image resolution format has the highest definition that is suited to the Macrovision signal.

On the other hand, HDMI provides a copyright protection arrangement called High-Definition Copy Protection (hereinafter will be referred to as HDCP) accommodating image resolution formats up to the 1080i image resolution format and, hence, the 1080i image can be outputted even if an HDMI-capable monitor having the 1080i image resolution format is connected to the HDMI terminal 81.

Specifically, in the case where the HDMI-capable monitor having the 1080i image resolution format is connected to the HDMI terminal 81, the micom 30c receives image resolution format information on that monitor as in embodiment 3. Then, based on the stream information and image resolution format information received, the micom 30c sends the image resolution format switching signal to the image output switcher 70 to cause the image output switcher 70 to output the 1080i image to the HDMI terminal 81.

The above-described configuration wherein the stream information and the image resolution format information are extracted and the micom 30c judges an optimum image resolution format for each terminal and then informs the image output switcher 70 of the optimum image resolution format, is capable of outputting image data that complies with copyright information and is optimum for the image resolution format of an external monitor without requiring that the operator recognize the image resolution format of the external monitor and the copyright of decoded image data.

Further, in outputting decoded image data having a limitation on image resolution format to a display device having an HDMI interface, the above-described configuration can match the enlargement ratio limited by the image resolution format limitation with the image resolution format of the display device.

Thus, in outputting an image based on decoded image data having an image resolution format limitation imposed by copyright information to a display device having an interface allowing the image resolution format of the display device to be recognized such as HDMI, this embodiment is capable of outputting image data that is compliant with copyright information or optimum for the image resolution format of the external display device.

While this embodiment 4 has been described to have the system LSI 88 constituted of a one-chip LSI forming the section encircled by broken line in Fig. 5, there is no limitation to this feature. The portion of the system LSI 88 excluding the OSD generator 51 and the micom 30 may be constituted of a one-chip LSI.

Further, while this embodiment has been described to have the micom 30c which sends the image resolution format switching signal to the image output switcher 70 to cause the image output switcher 70 to output to the D3 terminal 82 the 480p image of which the image resolution format has the highest resolution that is suited to the Macrovision signal, there is no limitation to this feature. It is possible that the micom 30c sends the image resolution format switching signal to the image output switcher 70 to cause the image output switcher 70 to output to the D3 terminal 82 the 480i image of which the image resolution format has the lowest resolution that is suited to the Macrovision signal.

It should be noted that though the first image resolution format, second image resolution format and third image resolution format of the present invention have been described to be the 1080i image resolution format, 480p image resolution format and 480i image resolution format, respectively, of this embodiment, there is no limitation thereto. The first image resolution format, second image resolution format and third image resolution format of the present invention may be 720p image resolution format, 480p image resolution format and 480i image resolution format, respectively. In short, the first image resolution format, second image resolution format and third image resolution format of the present invention simply have to be such that the third image resolution format has a lower resolution than the second image resolution format, which in turn has a lower resolution than the first image resolution format.

The program of the present invention is a program which is cooperative with a computer for causing the computer to exercise the functions of all or some of the means of the above-described apparatus of the present invention.

The recording medium of the present invention is a recording medium which carries the program for causing the computer to exercise the functions of all or some of the means of the above-described apparatus of the present invention, and which allows the computer to read the program so that the program read cooperates with the computer to exercise the aforementioned functions.

It is to be noted that the aforementioned "some means" of the present invention is meant to include one or some of those plural means.

The "functions of the means" is meant to include all or some of the functions of the means.

One embodiment of use of the program according to the present invention may be an embodiment wherein the program is recorded on a computer-readable recording medium and cooperates with a computer.

Another embodiment of use of the program according to the present invention may be an embodiment wherein the program is transmitted through a transmission medium, read by a computer and cooperates with the computer.

The "recording medium" is meant to include ROM and the like, while the "transmission medium" meant to include such a transmission medium as Internet or the like, and light, radio wave, sound wave, and the like.

The aforementioned computer according to the present invention is not limited to utter hardware such as a CPU, but may include firmware, OS and peripheral equipment.

As described above, the configuration of the present invention may be realized in the form of software or hardware.

### Industrial Applicability

As apparent from the foregoing description, the present invention makes it possible to provide an OSD composite image decoding apparatus which, even when connected to plural display devices having different image resolution formats at the same time, is capable of outputting image data as an image in the different image resolution formats at the same time, as well as an OSD composite image decoding method, program and recording medium.

Also, the present invention makes it possible to provide an OSD composite image decoding apparatus, OSD composite image decoding method, program and recording medium which can realize a simpler configuration of generating OSD data.

## Claims

1. An OSD composite image decoding apparatus comprising:
image decoding means of decoding plural types of compressed image data which are different in image resolution format from each other;
first image resolution format conversion means of converting decoded image data decoded by said image decoding means to a first image resolution format and outputting said decoded image data thus converted when said decoded image data has an image resolution format other than said first image resolution format while outputting said decoded image data without conversion when said decoded image data has said first image resolution format;
OSD generating means of generating OSD for said first image resolution format to be synchronously superimposed on the image data outputted from said first image resolution format conversion means;
OSD synthesis means of superimposing said OSD for said first image resolution format generated by said OSD generating means and said image data outputted from said first image resolution format conversion means on each other;
second image resolution format conversion means of converting said image data having said first image resolution format which has undergone synthesis by said OSD synthesis means to image data having a second image resolution format having a lower resolution than said first image resolution format;
third image resolution format conversion means of converting the image data having said first image resolution format which has undergone synthesis by said OSD synthesis means to image data having a third image resolution format having a lower resolution than said second image resolution format;
plural output terminals to be connected to display devices, respectively;
output switching means connected to said OSD synthesis means, said second image resolution format conversion means and said third image resolution format conversion means and capable of inputting the image data having said first image resolution format, the image data having said second image resolution format and the image data having said third image resolution format and outputting them selectively; and
processing means of instructing said output switching means to output image data that is compatible with an image resolution format which is displayable by respective display devices to be connected to said output terminals to respective relevant one of said output terminals.

2. The OSD composite image decoding apparatus according to claim 1, further comprising image resolution format setting means of inputting and setting relation between each of said output terminals and an image resolution format which is displayable by said display device to be connected thereto, wherein
said processing means is operative to input said relation by said image resolution format setting means and gives an instruction according to said relation.

3. The OSD composite image decoding apparatus according to claim 1, further comprising image resolution format obtaining means provided between the output switching means and at least one of the plural output terminals and operative to obtain information indicative of the image resolution format of the display device to be connected to that output terminal and outputting the information to the processing means.

4. The OSD composite image decoding apparatus according to claim 1, wherein said processing means is operative to judge a type of image resolution format which is allowed to be outputted based on stream information included in said decoded image data and control said output switching means.

5. The OSD composite image decoding apparatus according to claim 4, wherein:
said compressed image data is compressed image data read out of a DVD;
said stream information includes a digital copy control descriptor; and
said processing means is operative to prohibit an analog output of the image data in said first image resolution format when the image resolution format of the image data is copy-protected by said digital copy control descriptor.

6. The OSD composite image decoding apparatus according to claim 1, wherein when plural ones of said display devices whose image resolution formats are different are connected to respective said output terminals at the same time, said processing means is operative to instruct said output switching means to output image data that is compatible with an image resolution format which is displayable by respective said display devices to be connected to respective said output terminals to respective relevant one of said output terminals.

7. The OSD composite image decoding apparatus according to claim 1, wherein said first image resolution format conversion means is operative to judge the image resolution format of said decoded image data by utilizing at least one of pixel clock frequency, horizontal synchronizing signal frequency and vertical synchronizing frequency of said decoded image data and determine an enlargement ratio to said first image resolution format based on said image resolution format thus judged.

8. The OSD composite image decoding apparatus according to claim 1, wherein:
said processing means is operative to judge the image resolution format of said decoded image data from stream information included in said decoded image data, determine an enlargement ratio to said first image resolution format based on said image resolution format thus judged, and inform said first image resolution format conversion means of said enlargement ratio thus determined; and
said first image resolution format conversion means is operative to convert said decoded image data to said first image resolution format using said enlargement ratio thus given.

9. The OSD composite image decoding apparatus according to claim 1, wherein:
said first image resolution format is 1080i image resolution format;
said second image resolution format is 480p image resolution format; and
said third image resolution format is 480i image resolution format.

10. An OSD composite image decoding method comprising:
an image decoding step of decoding plural types of compressed image data which are different in image resolution format from each other;
a first image resolution format conversion step of converting decoded image data decoded at said image decoding step to a first image resolution format and outputting said decoded image data thus converted when said decoded image data has an image resolution format other than said first image resolution format while outputting said decoded image data without conversion when said decoded image data has said first image resolution format;
an OSD generating step of generating OSD for said first image resolution format to be synchronously superimposed on the image data outputted at said first image resolution format conversion step;
an OSD synthesis step of superimposing said OSD for said first image resolution format generated at said OSD generating step and the image data outputted at said first image resolution format conversion step on each other;
a second image resolution format conversion step of converting said image data having said first image resolution format which has undergone synthesis at said OSD synthesis step to image data having a second image resolution format having a lower resolution than said first image resolution format;
a third image resolution format conversion step of converting the image data having said first image resolution format which has undergone synthesis at said OSD synthesis step to image data having a third image resolution format having a lower resolution than said second image resolution format;
an output switching step capable of inputting the image data having said first image resolution format which results from said OSD synthesis step, the image data having said second image resolution format which results from said second image resolution format conversion step and the image data having said third image resolution format which results from said third image resolution format conversion step and outputting them selectively; and
a processing step of giving an instruction to said output switching step to output image data that is compatible with an image resolution format which is displayable by respective said display devices to be connected to plural output terminals to respective relevant one of said output terminals.

11. A program of causing a computer to function as:
image decoding means of decoding plural types of compressed image data which are different in image resolution format from each other;
first image resolution format conversion means of converting decoded image data decoded by said image decoding means to a first image resolution format and outputting said decoded image data thus converted when said decoded image data has an image resolution format other than said first image resolution format while outputting said decoded image data without conversion when said decoded image data has said first image resolution format;
OSD generating means of generating OSD for said first image resolution format to be synchronously superimposed on the image data outputted from said first image resolution format conversion means;
OSD synthesis means of superimposing said OSD for said first image resolution format generated by said OSD generating means and said image data outputted from said first image resolution format conversion means on each other;
second image resolution format conversion means of converting said image data having said first image resolution format which has undergone from synthesis by said OSD synthesis means to image data having a second image resolution format having a lower resolution than said first image resolution format;
third image resolution format conversion means of converting the image data having said first image resolution format which has undergone synthesis by said OSD synthesis means to image data having a third image resolution format having a lower resolution than said second image resolution format;
output switching means connected to said OSD synthesis means, said second image resolution format conversion means and said third image resolution format conversion means and capable of inputting the image data having said first image resolution format, the image data having said second image resolution format and the image data having said third image resolution format and outputting them selectively; and
processing means of instructing said output switching means to output image data that is compatible with an image resolution format which is displayable by respective display devices to be connected to said output terminals to respective relevant one of said output terminals,
of an OSD composite image decoding apparatus as recited in claim 1.

12. A recording medium carrying a program as recited in claim 11, which is operable by a computer.
